# EUROPEAN PATENT APPLICATION

(11) **EP 1 510 956 A1**
(43) Date of publication of application: **02.03.2005**
(21) Application number: 04253277.0
(22) Date of filing: 02.06.2004
(51) Int. Cl.: G06F 17/60

(54) **Method and system for structuring a trade convention for financial institutions**

(30) Priority: 02.06.2003 US 474990 P
(71) Applicant: Goldman Sachs & Co., New York, NY 10004 (US)
(72) Inventor: Bock, Matthias, London N6 5BZ (GB)
(74) Representative: Charig, Raymond Julian

(57) **Abstract**

Certain embodiments of the present invention relate to methods and systems which bring together the strength of a first broker in the provision of research services and the strength of a second broker in the provision of order execution services for the securities which are the subject of the research. In addition, the present invention may make transparent to the investing client the costs of research and execution, respectively, without substantially compromising certain tax and/or regulatory advantages connected with the bundled provision of research and execution.

## Description

### FIELD OF THE INVENTION

Various embodiments of the present invention relate to methods and systems for structuring a trade convention for financial institutions.

More particularly, certain embodiments of the present invention (hereinafter sometimes referred to as "correspondent trading") relate to methods and systems which bring together the strength of a first broker in the provision of research services and the strength of a second broker in the provision of order execution services for the securities which are the subject of the research. In addition, the correspondent trading of the present invention may make transparent to the investing client the costs of research and execution, respectively, without substantially compromising certain tax and/or regulatory advantages connected with the bundled provision of research and execution.

Thus, the correspondent trading of the present invention may permit a client to execute a securities buy or sell order through one broker (e.g., a preferred execution broker) while receiving research services related to the securities being bought/sold from another broker (e.g., a small specialist broker).

For the purposes of the present application the term "entity" is intended to refer to any company, organization, group or individual.

Further, for the purposes of the present application the term "security" is intended to refer to a mechanism evidencing debt and/or ownership of asset(s).

Further still, for the purposes of the present application the term "agreement" is intended to include, but not be limited to, a written and/or oral: (a) understanding; (b) contract; (c) arrangement; (d) deal; (e) bargain; (f) covenant; or (g) transaction.

Further still, for the purposes of the present application the term "research services" is intended to refer to the provision of data and/or analysis and/or opinion related to one or more securities.

Further still, for the purposes of the present application the term "order execution services" is intended to refer to the carrying out of a trade of one or more securities.

### BRIEF DESCRIPTION OF THE DRAWINGS

Fig. 1 shows a block diagram associated with an example transaction structure according to an embodiment of the present invention; and
Fig. 2 shows a block diagram associated with an example transaction structure according to an embodiment of the present invention.

Among those benefits and improvements that have been disclosed, other objects and advantages of this invention will become apparent from the following description taken in conjunction with the accompanying figures. The figures constitute a part of this specification and include illustrative embodiments of the present invention and illustrate various objects and features thereof.

### BACKGROUND OF THE INVENTION

In the field of securities research and order execution there have typically been certain tax and/or regulatory advantages connected with the bundled provisional of such research and order execution services.

Nevertheless, such bundling may have contributed to the use of a service provider having a relatively strong research capability but a relatively weak order execution capability. Conversely, such bundling may have contributed to the use of a service provider having a relatively weak research capability but a relatively strong order execution capability.

Moreover, such bundling may have contributed to a reduced transparency regarding the costs of research and order execution.

### DETAILED DESCRIPTION OF THE INVENTION

Detailed embodiments of the present invention are disclosed herein; however, it is to be understood that the disclosed embodiments are merely illustrative of the invention that may be embodied in various forms. In addition, each of the examples given in connection with the various embodiments of the invention are intended to be illustrative, and not restrictive. Further, any figures are not necessarily to scale, some features may be exaggerated to show details of particular components. Therefore, specific structural and functional details disclosed herein are not to be interpreted as limiting, but merely as a representative basis for teaching one skilled in the art to variously employ the present invention.

In one embodiment a method implemented by a programmed computer system for supplying, to a first entity, securities research services of a second entity and securities order execution services of a third entity is provided, comprising: providing, to the first entity, the securities research services of the second entity; providing, from the first entity to at least one of the second entity and the third entity, a securities order execution instruction based at least in part upon the securities research services; providing, to the first entity, securities order execution services of the third entity, which securities order execution services of the third entity include carrying out the securities order execution instruction; calculating a commission due to the second entity for the securities research services associated with the securities order execution instruction; and calculating a commission due to the third entity for the order execution services associated with the securities order execution instruction.

In one example, the first entity may be an investment manager.

In another example, at least one of the second entity and the third entity may be a broker.

In summary, certain embodiments of the correspondent trading mechanism according to the present invention relate to methods and systems which bring together the strength of a first broker in the provision of research services and the strength of a second broker in the provision of execution services for the securities which are the subject of the research. In addition, the correspondent trading of the present invention may make transparent to the investing client the costs of research and execution, respectively, without substantially compromising certain tax and/or regulatory advantages connected with the bundled provision of research and execution.

Of note, the correspondent trading of the present invention may, for example (which example is intended to be illustrative and not restrictive), be driven at least in part by one or more of the following factors:
- An increase in the importance of execution excellence. Smaller brokerage firms typically do not have the order flow, skill or capital to be able to complete with the larger "bulge bracket" firms.
- There has been a call (e.g., the "Myners Report" in the UK) for greater transparency and the unbundling of brokerage services so that pension fund managers are able to choose and pay for research, sales, trading and other services separately and from diverse sources. This in turn is meant to enable fund managers to justify why they trade with brokers. It is believed that to date there has been no straight forward mechanism to achieve this.
- A view that in the short term (e.g., 1-3 years) about 90% of trading globally will be done by about 8-10 firms, but that research will still be a valid activity for about 60-100 firms.

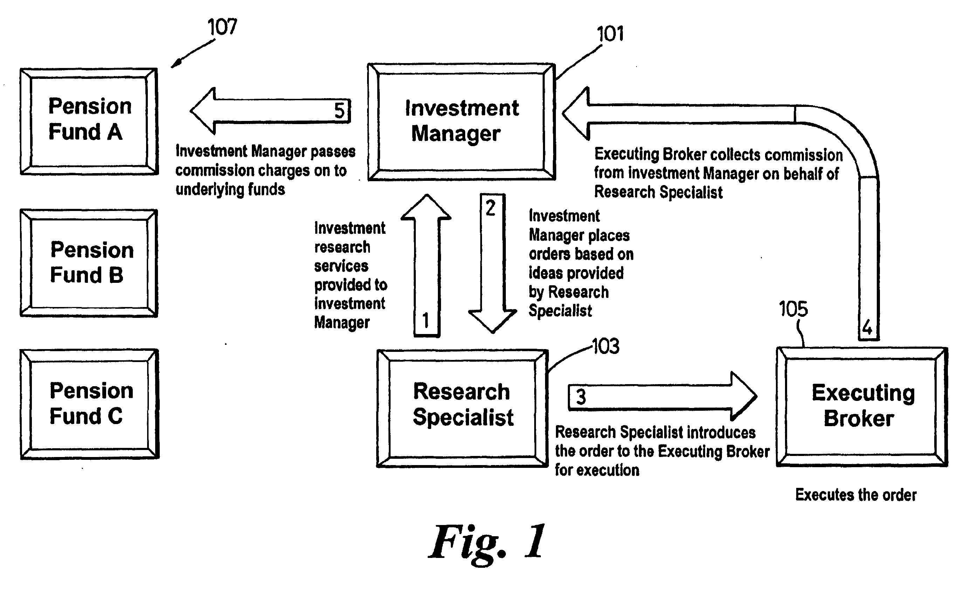

Referring now to Fig. 1, one example (which example is intended to be illustrative and not restrictive) of a correspondent trading transaction structure is shown. As seen in this Fig. 1, the transaction structure may involve a client (Investment Manager 101), a first broker (Research Specialist 103) and a second broker (Executing Broker 105). In addition, Investment Manager 101 may carry out certain acts on behalf of Pension Funds A, B and C (Pension Funds 107).

The steps carried out under the correspondent trading transaction structure of this Fig. 1 may include (but not be limited to) the following:
1. Investment research services (e.g., research and ideas) provided to Investment Manager 101 from Research Specialist 103.
2. Investment Manager 101 places an order based on research and ideas provided by Research Specialist 103.
3. Research Specialist 103 introduces the order to Executing Broker 105 for execution.
4. Executing Broker 105 executes the order and settles with Investment Manager 101 (e.g., collects commission from Investment Manager 101 on behalf of Research Specialist 103 - Executing Broker 105 may keep a portion, as described below).
5. Investment Manager 101 passes commission charges on to underlying Pension Funds 107.

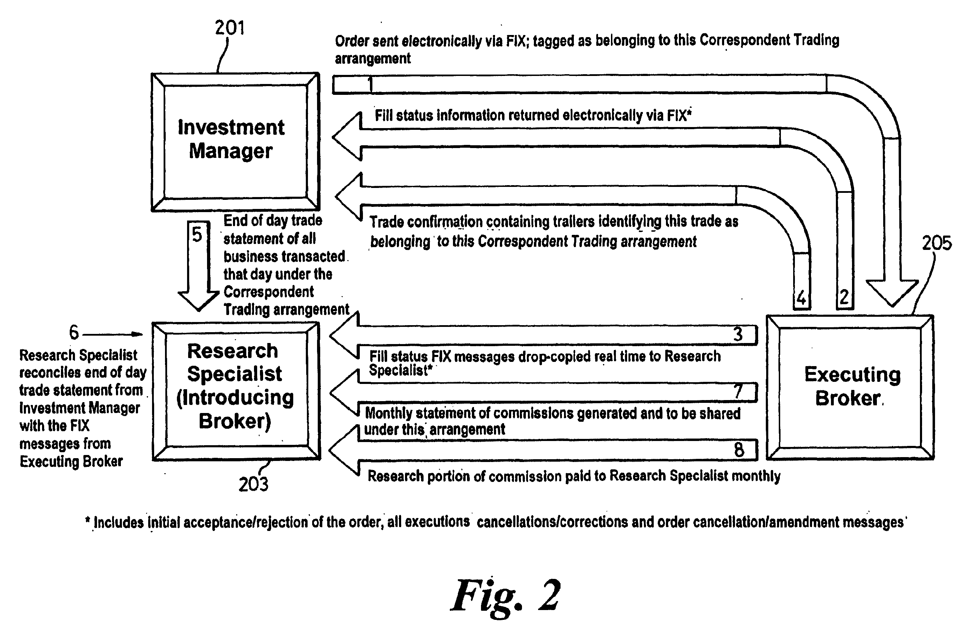

Referring now to Fig. 2, another example (which example is intended to be illustrative and not restrictive) of a correspondent trading transaction structure is shown. As seen in this Fig. 2, the transaction structure may again involve a client (Investment Manager 201), a first broker (Research Specialist 203) and a second broker (Executing Broker 205). In addition, Investment Manager 201 may carry out certain acts on behalf of certain Pension Funds (not shown).

The steps carried out under the correspondent trading transaction structure of this Fig. 2 may include (but not be limited to) the following:
1. Investment Manager 201 sends an order to buy and/or sell one or more securities. The order may be sent electronically (e.g., via FIX) and the order may be "tagged" (i.e., identified) as belonging to a correspondent trading arrangement.
2. Fill status information is returned electronically (e.g., via FIX). The fill status information may include, for example, some or all of the following: initial acceptance/rejection of the order, all executions, execution cancellations/rejections, and order cancellation/amendment messages.
3. Fill status information is drop-copied (e.g., in real time) to Research Specialist 203. Again, the fill status information may include, for example, some or all of the following: initial acceptance/rejection of the order, all executions, execution cancellations/rejections, and order cancellation/amendment messages.
4. Executing Broker 205 executes the order and sends (e.g., electronically) a trade confirmation. The trade confirmation may include, for example, a trailer identifying the trade as belonging to a correspondent trading arrangement.
5. Investment Manager 201 sends (e.g., electronically) end of day trade statement of all business transacted that day under a correspondent trading arrangement.
6. Research Specialist 203 reconciles end of day trade statement from Investment Manager 201 with the messages (e.g., FIX messages) from Executing Broker 205.
7. Executing Broker 205 sends (e.g., electronically) to Research Specialist 203 a monthly statement of commissions generated and to be shared under a correspondent trading arrangement.
8. Research portion of commission paid to Research Specialist 203 (e.g., monthly).

In another example (which example is intended to be illustrative and not restrictive), the correspondent trading may involve an agreement whereby the research broker takes responsibility for research as well as execution and acts as an introducer of the resulting orders to the executing broker. Technically, this may be achieved by the client sending the order to the research broker and the executing broker essentially simultaneously using the FIX protocol. The agreement may specify that the research broker is entitled to the commission from the client and pays the executing broker for the execution portion. In settling the transaction, the commission may be collected by the executing broker on behalf of the research broker.

In this regard, reference will now be made to example terms of an "Introducing Broker Agreement" which may be used to carry out correspondent trading pursuant to the present invention. More particularly, it is noted that in this example (which example is intended to be illustrative and not restrictive), the following terms may apply:

### 1. Recitals

(a) The Client wishes to procure from the Introducing Broker the provision of certain brokerage services, including the reception of orders for the purchase and sale of securities from the Client, arranging for the execution of such orders through third party brokers and ancillary services commonly provided by authorized firms to their clients such as the provision of research and trading ideas.
(b) The Introducing Broker wishes to procure from the Executing Broker the execution of such orders.
(c) The Parties agree that the reception and transmission of orders can efficiently be effected by the Client routing the orders via the FIX protocol to the Introducing Broker and the Executing Broker.

### 2. Introduction And Execution Of Directed Orders

(a) The Client may, in its discretion, oblige the Introducing Broker to arrange for the execution of orders for the purchase and sale of securities in accordance with the provisions of this Agreement (either to be executed on a regulated market or to be executed through off-exchange principal transactions) by identifying such orders through an appropriate "Flag" as agreed from time to time between the Parties to this Agreement.
(b) The Introducing Broker is responsible, as agent of the Client, for ensuring that all orders identified in accordance with Clause 2(a) of this Agreement (the "Directed Orders") are forwarded to the Executing Broker, giving rise to resulting transactions (the "Transactions") which shall be settled as between the Executing Broker and the Client, or as the Client directs.
(c) The Executing Broker reserves the right to reject any Directed Orders in its absolute discretion.
(d) For the avoidance of doubt, this Agreement shall be non-exclusive and brokerage and execution services provided to the Client by the Introducing Broker or to the Introducing Broker or to the Client by the Executing Broker in relation to other orders than Directed Orders shall not be governed by the terms of this Agreement.

### 3. Commissions

(a) Only the Introducing Broker may charge the Client a commission for execution of the Transactions (the "Client Commission"), such Client Commission being subject to agreement between the Introducing Broker and the Client. The Client herewith acknowledges that such Client Commission may be shared by the Introducing Broker with the Executing Broker. The Introducing Broker will make available to the Client upon request the amount or basis of such shared commission.
(b) The Introducing Broker shall be responsible, as agent for the Client, for ensuring that a commission is paid to the Executing Broker for the Executing Broker's execution of the orders (the "Broker Commission"), such Broker Commission being subject to agreement between the Executing Broker and the Introducing Broker.
(c) The Introducing Broker hereby instructs the Executing Broker to collect on its behalf and forward to it the Client Commission, subtracting from it the Broker Commission for the respective Directed Orders. The Executing Broker shall be responsible to the Introducing Broker for the collection of such Client Commission.
(d) The Executing Broker shall send to the Introducing Broker a statement of all Transactions settled during the previous calendar month on or before the end of the first Business Day (for these purposes, "Business Day" is defined as any day which is not a Saturday or Sunday or Christmas Day, Good Friday or a bank holiday in London) of the next following month and the Introducing Broker may object to any aspect of such statement on or before the end of the seventh Business Day of that month.
(e) If the Introducer Broker objects to a statement served under Clause 3(d) then the Introducing Broker and the Executing Broker will use their best endeavors to resolve the matter as soon as practicable.
(f) The Executing Broker shall pay to the Introducing Broker any Client Commission, collected on behalf of the Introducing Broker and shown in a statement served by the Executing Broker under Clause 3(d), minus any Broker Commission due to the Executing Broker from the Introducing Broker for such trades, within one month after the statement served by the Executing Broker has been confirmed as accurate by the Introducing Broker.

### 4. Confirmations

(a) In respect of each Transaction, the Executing Broker will issue a confirmation to the Client.
(b) This confirmation will:
   - indicate through an appropriate statement that the Transactions have been introduced by the Introducing Broker (e.g. by the legend "Courtesy of Introducing Broker")
   - detail the Client Commission and specify that the Client Commission is collected by the Executing Broker on behalf of the Introducing Broker.

### 5. Transmission Of Directed Orders

The Client will transmit the orders via the FIX protocol, in a manner to be further agreed between the Parties.

### 6. Representations And Warranties

Each of the Parties represent, warrant and undertake to each other (for the benefit of each other and their affiliated entities), as of the date of this Agreement and on each day that the arrangements described herein continue, that:
(a) it is duly organized, validly existing and in good standing under the laws of England and has power to own all of its property and assets (as applicable) and to carry on its business as it is now being conducted and to carry out its obligations under this Agreement;
(b) on entering into and acting in accordance with this Agreement it will not violate (and have obtained legal advice, as appropriate, to this effect):
   - any fiduciary, contractual or other obligations owed to any of its clients;
   - the provisions of any client agreement, trust deed or any other relevant contract;
   - any applicable legal, tax or regulatory requirement, including without limitation any corporate or tax law, reporting requirements and obligations, or rules requiring disclosure to its clients of the arrangements described herein.
(c) If at any time for any Party the above representations and warranties, or any of the representations and warranties contained in this Agreement, cease to be correct in any respect, the relevant Party will immediately notify the other Parties of such fact.

### 7. Limitations Of Liabilities And Indemnities

(a) The Introducing Broker and the Executing Broker shall be liable for damage or loss only subject to any other agreement in place between the respective Parties and only to the extent arising directly from any act or omission by the respective Party hereunder that constitutes negligence, fraud or willful default.
(b) The Parties will indemnify and hold each other and the affiliated entities of the other Parties harmless from any and all expenses, losses, damages, liabilities, demands, charges, actions and claims of any kind or nature whatsoever (including any legal or other costs and expenses relating to investigating or defending any such demands, charges or claims) for any breach or inaccuracy in any material respect of the foregoing representations, warranties or undertakings. This Paragraph shall survive the termination of this Agreement.

### 8. Termination

This Agreement may be terminated immediately by any Party upon written notice to each of the other Parties.

### 9. Miscellaneous

(a) Nothing in these arrangements or in any operation or transaction in relation to them shall be treated as a partnership or joint venture between any of the Executing Broker, the Introducing Broker and/or the Client.
(b)The Introducing Broker and the Executing Broker agree not to hold themselves out as each other's agent or as agent of each others affiliated entities.
(c) In accordance with Rule 4.1.5R(2) of the Conduct of Business Rules of the Financial Services Authority the Executing Broker and the Introducing Broker agree that the Client and not the Introducing Broker shall be treated as the client of the Executing Broker under the Conduct of Business Rules.
(d) The relationship between the Executing Broker and the Client will be governed by the General Terms and Conditions of the Executing Broker as exist between the Executing Broker and the Client, as far as such General Terms and Conditions do not conflict with the provisions of this Agreement. In the event of any conflict between the General Terms and Conditions and the provisions of this Agreement, this Agreement will prevail.
(e) The relationship between the Introducing Broker and the Client will be governed by such general terms and conditions as exist between the Introducing Broker and the Client as amended from time to time, provided that insofar as such general terms and conditions conflict with the provisions of this Agreement the provisions on this Agreement shall prevail. The Introducing Broker shall not owe a duty of best execution to the Client.
(f) Notices and other communications from the Executing Broker, the Introducing Broker or the Client under this Agreement shall be in writing and delivered by hand, registered mail, confirmed facsimile transmission or first class prepaid post to the party receiving such communication at the address specified below:
   - If to the Introducing Broker: [ ]
   - If to the Executing Broker: [ ]
   - If to the Client: [ ]
(g) Each Party agrees that this Agreement and its terms and the services provided hereunder shall be treated as confidential and shall not be disclosed to third Parties without the prior written consent of the other Parties except as required by law or applicable regulations or for disclosure to the parties legal counsel or accountants.

### 10. Applicable Law, Jurisdiction And Arbitration

(a) The terms of these arrangements as set out in this Agreement shall be governed by, and construed in accordance with, the laws of England and Wales.
(b) The Parties submit for each other's benefit to the non-exclusive jurisdiction of the English courts.
(c) Any dispute between the Parties arising out of, or in relation to, this Agreement may, at the option of either Party, be settled by arbitration, in accordance with the rules then obtaining of either the LCIA (formerly, The London Court of International Arbitration). Any arbitration hereunder shall be before at least three arbitrators and the award of the arbitrators, or of a majority of them, shall be final, and judgment upon the award rendered may be entered in any court, domestic or foreign, having jurisdiction. The place of arbitration shall be London and the language of the arbitration shall be English.

In another embodiment, the present invention may create a structure that helps ensure that correspondent trades are not classified (e.g., in legal and/or regulatory terms) as "soft dollars" (in this regard it is noted that: (a) soft dollars may only be available to certain funds; (b) the soft dollar bill may already be unsustainably high; (c) soft dollars may be outlawed at some time in the future; and/or (d) soft dollar payments may be subject to VAT (17.5% is a lot of lost value)).

Thus, under this embodiment the trade structure from a legal perspective may be as follows:
1. A first entity ("Institution A") receives good research ideas from a second entity ("Small Broker B"). Institution A does not like trading with Small Broker B because Small Broker B routinely fails to achieve good execution. Institution A gives the order to Small Broker B but instructs Small Broker B to pass the trade to a third entity ("Institution C") to execute the order.
2. Instead of executing the order itself, Small Broker B introduces the order to Institution C. Institution C executes the order, settles the trade and collects the commission on behalf of Small Broker B. Institution C and Small Broker B divide the commission according to a predetermined agreement. After a certain period of time (e.g., at the end of the month), Institution C pays Small Broker B (e.g., electronically or via a check) for the value of the divided commission.
3. It is believed that by using the introductory broker route and by splitting commission, Institution C has avoided the trades becoming either soft or subject to VAT.

While the above description was made in a legal/regulatory context, the following details what happens in this same embodiment from a technical perspective:
1. Institution A sends a FIX message to Institution C. The FIX message creates an "echo" which alerts Small Broker B that a trade has been initiated.
2. As the trade is executed, fills are FIX'ed to both Institution A and Small Broker B. This prevents a manual passing of the trade from Small Broker B to Institution C and reduces the likelihood of errors or delay.

Thus, for Institution A, one benefit (which benefit is intended to be illustrative and not restrictive) is that Institution A can concentrate its trading with a relatively small number of strong execution houses, but still receive research and other non-trading services from a wide number of suppliers. For Small Broker B, one benefit (which benefit is intended to be illustrative and not restrictive) is that clients do not need to put off trading with Small Broker B because of poor execution (in the long run, Small Broker B may be able to close down its trading and/or back office functions). For Institution C (e.g. an investment banker) one benefit (which benefit is intended to be illustrative and not restrictive) is that Institution C may receive more market share and flow (it is believed that if correctly priced, Institution C should make at least a small margin on the correspondent trades).

In another embodiment, any reporting and/or commission reconciliation/payment (e.g., between the investment manager and the research specialist, between the investment manager and the executing broker, and/or between the research specialist and the executing broker) may be carried out at whatever frequency is desired (e.g., hourly, daily, weekly, monthly, quarterly, semi-annually, annually).

In another embodiment, any reporting and/or commission reconciliation/payment (e.g., between the investment manager and the research specialist, between the investment manager and the executing broker, and/or between the research specialist and the executing broker) may be carried out using any desired electronic mechanism (e.g., an electronic connectivity network operated by one of the parties and/or the Internet).

Of note, the method embodiments described herein may, of course, be implemented using any appropriate computer hardware and/or computer software. In this regard, those of ordinary skill in the art are well versed in the type of computer hardware that may be used (e.g., a mainframe, a mini-computer, a personal computer ("PC"), a network (e.g., an intranet and/or the Internet)), the type of computer programming techniques that may be used (e.g., object oriented programming), and the type of computer programming languages that may be used (e.g., C++, Basic). The aforementioned examples are, of course, illustrative and not restrictive.

While a number of embodiments of the present invention have been described, it is understood that these embodiments are illustrative only, and not restrictive, and that many modifications may become apparent to those of ordinary skill in the art. For example, certain methods have been described herein as being "computer implementable". In this regard it is noted that while such methods can be implemented using a computer, the methods do not necessarily have to be implemented using a computer. Also, to the extent that such methods are implemented using a computer, not every step must necessarily be implemented using a computer. Further, the specific dates, time spans, rates, prices, values and the like described with reference to the various examples are, of course, illustrative and not restrictive. Further still, while the present invention has been described principally with respect to one client, one introducing broker and one executing broker, the present invention may, of course, be applied in the context of multiple clients, multiple introducing brokers and/or multiple executing brokers. Further still, the various steps may be carried out in any desired order.

The present invention also provides:-
- a computer program product directly loadable into the internal memory of a digital computer, comprising software code portions for performing the method of the present invention when said product is run on a computer;
- A computer program directly loadable into the internal memory of a digital computer, comprising software code portions for performing the method of the present invention when said program is run on a computer.
- A carrier, which may comprise electronic signals, for a computer program of the present invention;
- Electronic distribution of a computer program product, or a computer program, or a carrier of the present invention.

## Claims

1. A method implemented by a programmed computer system for supplying, to a first entity, securities research services of a second entity and securities order execution services of a third entity, comprising:
providing, to the first entity, the securities research services of the second entity;
providing, from the first entity to at least one of the second entity and the third entity, a securities order execution instruction based at least in part upon the securities research services;
providing, to the first entity, securities order execution services of the third entity, which securities order execution services of the third entity include carrying out the securities order execution instruction;
calculating a commission due to the second entity for the securities research services associated with the securities order execution instruction; and
calculating a commission due to the third entity for the order execution services associated with the securities order execution instruction.

2. The method of claim 1, wherein the first entity is an investment manager.

3. The method of claim 1, wherein at least one of the second entity and the third entity is a broker.

4. A computer program product directly loadable into the internal memory of a digital computer, comprising software code portions for performing the method of any one or more of Claims 1 to 3 when said product is run on a computer.

5. A computer program directly loadable into the internal memory of a digital computer, comprising software code portions for performing the method of any one or more of Claims 1 to 3 when said program is run on a computer.

6. A carrier, which may comprise electronic signals, for a computer program of Claim 5.

7. Electronic distribution of a computer program product of Claim 4 or a computer program of Claim 5 or a carrier of Claim 6.
